# DEMANDE DE BREVET EUROPEEN

(11) **EP 4 649 818 A1**
(43) Date de publication de la demande: **19.11.2025**
(21) Numéro de dépôt: 25166535.2
(22) Date de dépôt: 27.03.2025
(51) Int. Cl.: A01G 3/04, B62K 5/02, A01D 34/08, A01D 34/14, A01D 34/67, A01D 75/20, A01D 75/28, B62J 50/00, B62K 5/06

(54) **TRICYCLE DE JARDINAGE**

(30) Priorité: 16.05.2024 FR 2405036
(71) Demandeur: Brassard, Pierre, 28170 Serazereux (FR)
(72) Inventeur: Brassard, Pierre, 28170 Serazereux (FR)
(74) Mandataire: Lequien, Philippe

(57) **Abrégé**

L'invention concerne un véhicule tricycle (100) de jardinage comprenant :
- des moyens de génération (500) d'un couple moteur comprenant un pédalier (510) ;
- un châssis (200) sur lequel est monté le pédalier (510) et une selle (110)
- un train roulant (300) arrière,
le train roulant (300) comprenant :
- un essieu (310) s'étendant selon un axe principal (A) ;
- deux roues (320) montées chacune à une extrémité de l'essieu (310), dans lequel le tricycle (100) comprend également un outil de jardinage (900) conçu pour découper des végétaux.

## Description

Le domaine de l'invention est celui de la conception et de la fabrication de véhicules de jardinage.

Plus précisément, l'invention concerne un tricycle équipé d'un outil de jardinage.

Dans le domaine de l'invention, il est connu le tricycle tondeur à gazon décrit dans le document de brevet publié sous le numéro FR2360238A1.

Ce tricycle comprend une roue avant et un train arrière moteur comprenant deux roues.

Le tricycle est équipé d'un dispositif de tonte associé à la roue avant et entraîné en mouvement par l'intermédiaire d'un galet appuyé sur la roue avant.

Un tel tricycle permet de réaliser la tonte de gazon sans avoir recours un moteur à essence provoquant une pollution sonore, et environnementale.

Il est également connu le tricycle décrit dans le document de brevet publié sous le numéro US4455816A1.

Ce tricycle comprend une roue avant directrice, un train arrière comprenant deux roues motrices entraînées par un pédalier, et des outils permettant de réaliser une tonte, montés sur le train arrière.

Les tricycles précédemment décrits, bien que permettant de réaliser la tonte d'une pelouse, présente pour inconvénients d'être potentiellement inconfortable à utiliser, voire risqué dans le cas où le terrain à tondre n'est pas plan, et horizontale.

De plus, il peut-être regretter que seule la tonte d'un terrain soit possible à l'aide de tels tricycles.

L'invention a notamment pour objectif de pallier les inconvénients de l'art antérieur.

Plus précisément, l'invention a pour objectif de proposer un tricycle de jardinage plus aisé, et plus sécurisant à utiliser que les tricycles de jardinage selon l'art antérieur.

L'invention a également pour objectif de fournir un tel tricycle qui présente une diversité d'usage plus importante que ce qui est proposé par l'art antérieur.

L'invention a en outre pour objectif de fournir un tel tricycle permettant à un utilisateur d'évoluer sur de fortes pentes de manière sûre et confortable.

Ces objectifs, ainsi que d'autres qui apparaîtront par la suite, sont atteints grâce à l'invention qui a pour objet un tricycle de jardinage comprenant :
- des moyens de génération d'un couple moteur comprenant un pédalier ;
- un châssis sur lequel est monté le pédalier et une selle ;
- un train roulant arrière,

le train roulant comprenant :
   - un essieu s'étendant selon un axe principal ;
   - deux roues montées chacune à une extrémité de l'essieu,
dans lequel le tricycle comprend également un outil de jardinage conçu pour découper des végétaux,
caractérisé en ce que le train roulant arrière est pendulaire, l'essieu étant monté à rotation sur le châssis selon un axe de rotation s'étendant transversalement à l'axe principal et selon une direction générale d'avancement en marche avant du tricycle,
et en ce que l'outil de jardinage est monté sur le train roulant et présente, par rapport au châssis, une mobilité dépendante d'un degré de rotation du train roulant autour de l'axe de rotation par rapport au châssis, et en ce que l'outil de jardinage est actionné par le pédalier et comprend des organes de coupe,
et en ce que les organes de coupe, et les roues du train roulant sont couplés au pédalier par l'intermédiaire de moyens de transmission, les moyens de transmission intégrant un ensemble d'engrenages configuré pour augmenter la fréquence d'actionnement des organes de coupe par rapport à une vitesse de rotation du pédalier, et diminuer la fréquence de rotation des roues du train roulant.

Grâce à son train roulant arrière qui est pendulaire, le tricycle de jardinage selon l'invention est plus aisé plus sécurisant à utiliser que les tricycles de jardinage selon l'art antérieur. En effet, le train roulant arrière pendulaire permet au tricycle de s'adapter à un terrain courbe sur lequel il évoluerait, voire à un terrain pentu.

En outre, grâce au montage de l'outil de jardinage sur le train roulant pendulaire, et à la mobilité cet outil de jardinage par rapport au châssis, l'outil de jardinage réalise alors son travail tout en étant orienté d'une manière adaptée à la pente et au relief sur lequel évolue le tricycle.

Grâce à son actionnement par le pédalier, l'outil de jardinage est mis en mouvement dès que le tricycle évolue sur le terrain.

Enfin, les moyens de transmission permettent de d'assurer un travail correct des organes de coupe.

Selon un premier mode de réalisation, les ou des organes de coupe sont des organes de coupe d'herbes situés entre les deux roues du train roulant.

Grâce à ce mode de réalisation, le tricycle permet de tondre un terrain de manière simple et sécurisée pour l'utilisateur du tricycle, et ce même si le terrain est incliné.

Selon un deuxième mode de réalisation, susceptible d'être associé avec le premier mode de réalisation précédent, les ou des organes de coupe sont des organes de coupe de végétaux aériens et forment un taille haie destiné à s'étendre transversalement à un plan horizontal.

Le tricycle de jardinage permet alors de réaliser une taille d'une haie. Le tricycle de jardinage doit alors être piloté de manière à évoluer parallèlement à la haie.

Ceci est particulièrement avantageuse du fait que, grâce à la mobilité de l'outil de jardinage dépendante d'un degré de rotation du train roulant par rapport au support, les organes de coupe de végétaux aériens peuvent toujours présenter la même angulation par rapport à un axe vertical (par exemple, maintien d'un angle nul pour verticaliser les organes de coupe) et ce quel que soit la pente du terrain sur lequel le tricycle évolue, et même si la pente évolue lorsque le tricycle avance.

Selon un mode de réalisation préféré, le train roulant comprend un mécanisme de verticalisation des roues formé par :
- une couronne principale pour chaque roue, la roue étant montée libre à rotation sur sa couronne ;
- un support formant bielle monté mobile à rotation à une première extrémité sur le châssis, autour de l'axe de rotation ;
- un vilebrequin monté mobile à rotation à une seconde extrémité du support ;
- un ensemble de barres, pour chaque roue, l'ensemble de barres comprenant au moins un groupe d'au moins trois barres parallélisées ne s'inscrivant pas dans un unique plan commun, l'ensemble de barres étant monté pivotant sur la couronne principale de ladite roue autour d'axes parallèles à l'axe de rotation R, et pivotant sur le vilebrequin autour d'axes parallèles à l'axe de rotation R.

Ce mécanisme permet de paralléliser les roues du train roulant tout en tendant à les maintenir verticales malgré l'évolution du tricycle sur un terrain qui ne serait pas horizontal. Entre autres, le vilebrequin répartit les charges de manière égale sur les flancs gauche et droit du tricycle, et par suite, sur chacune des roues.

Avantageusement, le mécanisme de verticalisation des roues comprend une couronne intermédiaire située entre chaque roue et le vilebrequin, et centrée sur l'axe principal, et l'ensemble de barre comprend pour chaque roue :
- un groupe proximal du vilebrequin d'au moins trois barres parallélisées s'étendant entre le vilebrequin et la couronne intermédiaire ;
- un groupe distant du vilebrequin d'au moins trois barres parallélisées s'étendant entre la couronne principale et la couronne intermédiaire.

Ces couronnes intermédiaires permettent de limiter l'encombrement des barres parallélisées en maintenant une partie de ces barres parallélisées au voisinage de l'essieu pour les barres du groupe distant.

Préférentiellement, chaque couronne intermédiaire porte un palier de l'essieu, ce palier étant monté mobile en rotation sur la couronne intermédiaire autour d'un axe parallèle à l'axe de rotation R et sécant avec l'axe principal A de l'essieu.

Ceci permet une répartition égale des charges en provenance des barres parallélisées proximales du vilebrequin, et favorise l'équilibre pour tendre à éviter que les roues ne se couchent sur le sol.

Préférentiellement, le châssis comprend :
- un cadre fixe s'étendant dans un unique plan, dit plan du cadre, dans lequel s'inscrit l'axe de rotation, la selle et le pédalier étant monté sur le cadre fixe ;
- un cadre secondaire s'étendant dans le plan du cadre, le cadre secondaire étant déformable dans le plan du cadre,

dans lequel le cadre secondaire comprend :
   - un premier palier de direction monté pivotant sur le cadre fixe, dans le plan du cadre ;
   - deux longerons montés glissants sur des points de pivotement portés par le cadre fixe ;
   - un second palier de direction couplé mobile à rotation sur les deux longerons ;
le premier palier de direction et le second palier de direction recevant un axe de direction associé à une roue directrice.

Cette conception permet d'adapter l'inclinaison avant/arrière du cadre fixe, de la selle, et d'un guidon couplé à l'axe de direction lorsque le tricycle monte ou descend une pente.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés décrits ci-après.
- La figure 1 est une représentation schématique en perspective arrière d'un tricycle selon un premier mode de réalisation ;
- La figure 2 est une représentation schématique en perspective arrière d'un tricycle selon un second mode de réalisation ;
- La figure 3 est une représentation schématique vu du côté du tricycle de la figure 2 ;
- La figure 4 est une représentation schématique centrée sur un pédalier et une partie de moyens de transmission du tricycle ;
- La figure 5 est une représentation schématique en perspective centrée sur une roue d'un train roulant du tricycle de la figure 1.

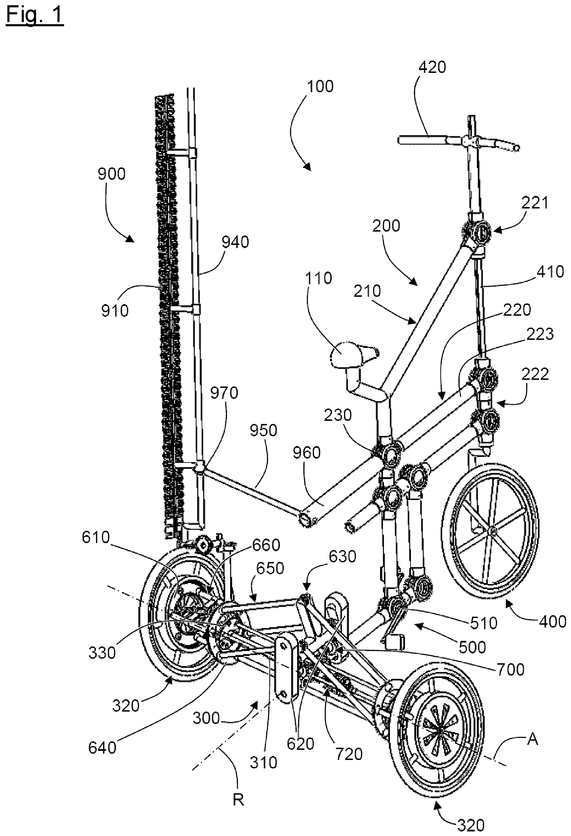

Les figures 1 à 3 illustrent des tricycles 100 de jardinage selon l'invention.

Le tricycle 100 de jardinage comprend un châssis 200 et un train roulant 300 arrière. Le tricycle 100 comprend également une roue directrice 400, une selle 110, et des moyens de génération 500 d'un couple moteur.

Tel que cela est décrit par la suite, le tricycle 100 comprend également un outil de jardinage 900 conçu pour découper des végétaux, cet outil comprenant des organes de coupe 910.

Selon les présents modes de réalisation, les moyens de génération 500 d'un couple moteur comprennent un pédalier 510.

Selon d'autres modes de réalisation envisageable, les moyens de génération 500 d'un couple moteur pourraient également comprendre un moteur électrique, par exemple conçu pour fournir une assistance au pédalage.

Le pédalier 510 et la selle 110 sont montés sur le châssis 200.

Le train roulant 300 arrière est du type pendulaire, et est monté à rotation sur le châssis 200.

Plus précisément, le train roulant 300 comprend un essieu 310, et deux roues 320.

Tel qu'illustré sur la figure 1, l'essieu 310 s'étend selon un axe principal A.

Les deux roues 320 sont quant à elles montées aux extrémités de l'essieu 310.

L'essieu 310 est ainsi monté à rotation sur le châssis 200 selon un axe de rotation R s'étendant transversalement à l'axe principal A et selon une direction générale d'avancement en marche avant du tricycle 100.

Selon le mode de réalisation, l'axe de rotation R est sécant avec l'axe principal A. Il est toutefois envisageable, selon d'autres modes de réalisation, que l'axe de rotation R ne soit pas sécant avec l'axe principal A, et notamment que l'axe principal A passe au-dessus de l'axe de rotation R, c'est-à-dire qu'il surplombe l'axe de rotation R.

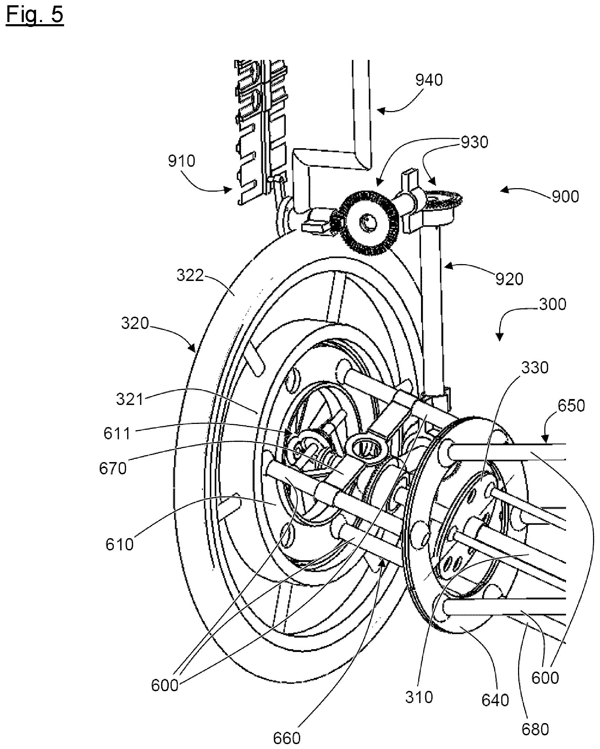

En référence à la figure 5, chaque roue 320 comprend :
- une jante 321 ;
- un pneumatique 322 monté sur la jante 321.

Le train roulant 300 comprend également une couronne principale 610 pour chaque roue 320. Cette couronne principale 610 forme un support pour la roue 320.

La roue 320 est ainsi montée libre à rotation sur sa couronne principale 610.

Plus précisément, le train roulant 300 comprend un chemin de roulement intercalé entre la jante 321 et la couronne principale.

Le train roulant 300 comprend encore un système de transmission 611 entre chaque extrémité de l'essieu 310 et les jantes 321, ce système de transmission 611 comprenant, entre autres, un pignon de renvoi d'angle monté à rotation autour d'un axe de pivotement 612 porté par la couronne principale 610 et s'étendant parallèlement à l'axe de rotation R.

En références aux figures 1, 2, 4 et 5, le train roulant 300 comprend aussi :
- un support 620 ;
- un vilebrequin 630 porté par le support 620 ;
- un ensemble de barres, pour chaque roue 320, couplant les couronnes principales 610 au vilebrequin 630.

Le support 620 forme une bielle.

Ce support 620 comprend deux parties s'étendant parallèlement l'une à l'autre, le long d'un axe perpendiculaire à l'axe de rotation R, entre une première extrémité et une seconde extrémité du support 620.

Le support 620 est monté mobile à rotation à sa première extrémité sur le châssis 200, autour de l'axe de rotation R.

Le vilebrequin 630 monté mobile à rotation sur la seconde extrémité du support 620. Le vilebrequin 630 est notamment monté mobile à rotation par rapport au support 620 autour d'un axe parallèle à l'axe de rotation R.

L'ensemble de barres de chaque roue 320 comprenant au moins un groupe d'au moins trois barres parallélisées 600 ne s'inscrivant pas dans un unique plan commun, l'ensemble de barres étant monté pivotant sur la couronne principale 610 de ladite roue autour d'axes parallèles à l'axe de rotation R, et pivotant sur le vilebrequin 630 autour d'axes parallèles à l'axe de rotation R.

Avec au moins trois barres parallélisées 600 ne s'inscrivant pas dans un unique plan commun, l'ensemble de barres permet de transmettre des efforts sur au moins trois points d'appui, en conservant un angle prédéfini entre les deux plans dans lesquels s'inscrivent respectivement les points de pivots des barres situés à une extrémité dudit groupe de barres, et les points de pivots des barres situés à l'autre extrémité dudit groupe de barres.

Selon les présents modes de réalisation, le tricycle 100 comprend en outre une couronne intermédiaire 640 située entre chaque roue 320 et le vilebrequin 630, et centrée sur l'axe principal A.

Tel que cela est visible sur les figures 1 et 5, cette couronne intermédiaire 640 accueille en son sein un disque 330 formant palier de l'essieu 310.

Le disque 330 est montée mobile en rotation sur la couronne intermédiaire 640 autour d'un axe parallèle à l'axe de rotation R et sécant avec l'axe principal A de l'essieu 310.

Le disque 330 s'étend orthogonalement à l'axe principal A.

De plus, tel que cela est visible sur les figures 1, 2, 4 et 5, l'ensemble de barre comprend pour chaque roue 320 :
- un groupe proximal 650 du vilebrequin 630 d'au moins trois barres parallélisées 600 s'étendant entre le vilebrequin 630 et la couronne intermédiaire 640 ;
- un groupe distant 660 du vilebrequin 630 d'au moins trois barres parallélisées 600 s'étendant entre la couronne principale 610 et la couronne intermédiaire 640.

En outre, une barre inférieure 680 s'étend entre les deux couronnes intermédiaire 640, sous l'essieu 310.

Toutes les barres parallélisées 600, et la barre inférieure 680, sont couplées à leurs extrémités par des liaisons autorisant un pivotement autour d'axes parallèles à l'axe de rotation R.

Tel que cela est identifié sur la figure 5, le train roulant 300 comprend au moins une traverse 670 entre deux barres parallélisées 600 dont les liaisons pivots distales de l'axe de rotation R sont colinéaires et dont les liaisons pivots proximales de l'axe de rotation R sont colinéaires. Cette traverse 670 est conçue pour autoriser uniquement un pivotement des barres parallélisées 600 dans des plans qui sont orthogonaux à l'axe de rotation R. Préférentiellement, le train roulant 300 comprend deux traverses 670 situées de part et d'autre du vilebrequin.

Selon un mode de réalisation envisageable, l'ensemble de barres de chaque roue 320 peut comprendre un unique groupe de barres parallélisées 600 s'étendant depuis le vilebrequin 630 jusqu'à la couronne principale 610. Dans ce cas, le tricycle pourrait ne pas comprendre de disque 330.

Plus généralement, le train roulant 300 comprend un mécanisme de verticalisation des roues 320 formé par la couronne principale 610, le support 620, le vilebrequin 630, et l'ensemble de barres.

Les barres de deux groupes proximaux de l'ensemble de barres, chacune en provenance des roues gauche et droite, convergent, de manière également répartie en direction du vilebrequin, pièce sur laquelle les charges associées à chacune des roues se compensent et se neutralisent pour produire un premier type d'équilibre, celui des charges à gauche du châssis sur les charges à droite, et réciproquement.

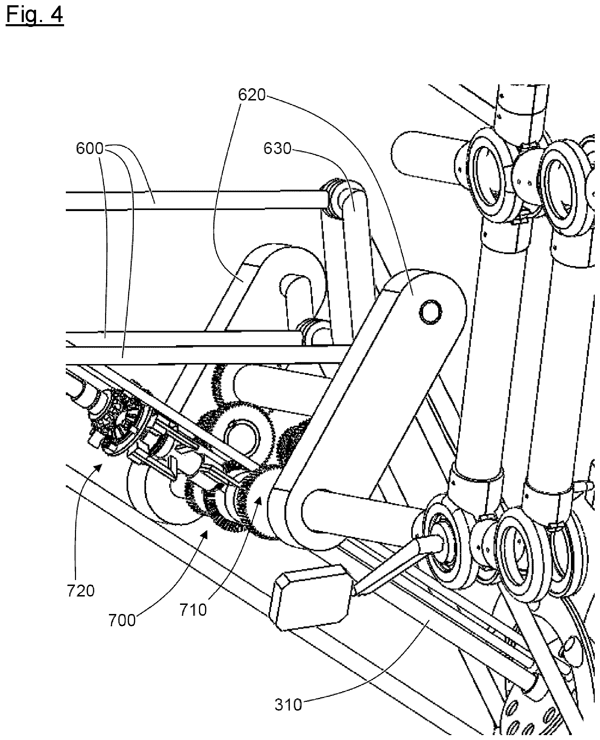

En référence aux figures 1 et 4, le tricycle comprend des moyens de transmission 700 conçus pour permettre la transmission d'un couple moteur provenant des moyens de génération 500. Les moyens de transmission 700 intégrant, entre autres, un ensemble d'engrenages 710, ainsi que l'essieu 310. A titre indicatif, les moyens de transmission 700 peuvent intégrer d'autres éléments tel qu'une courroie.

L'ensemble d'engrenages 710 est au moins partiellement accueilli au sein du support 620, et monté libre à rotation par rapport au support 620.

Selon les présents modes de réalisation, les organes de coupe 910, et les roues 320 du train roulant 300 sont couplés au pédalier 510 par l'intermédiaire des moyens de transmission 700.

Les moyens de transmission 700 sont notamment configurés pour augmenter la fréquence d'actionnement des organes de coupe 910 par rapport à une vitesse de rotation du pédalier 510, et diminuer la fréquence de rotation des roues 320 du train roulant 300.

Selon un mode de réalisation envisagé, les moyens de transmission 700 intègrent des boîtes de vitesse indépendantes pour l'actionnement des organes de coupe 910, et pour l'entraînement des roues 320.

En référence aux figures 1 et 4, Is moyens de transmission 700 intègrent également un différentiel 720 situé le long de l'essieu 310. Ceci permet d'ajuster la vitesse de rotation des roues 320 lorsque le tricycle 100 tourne.

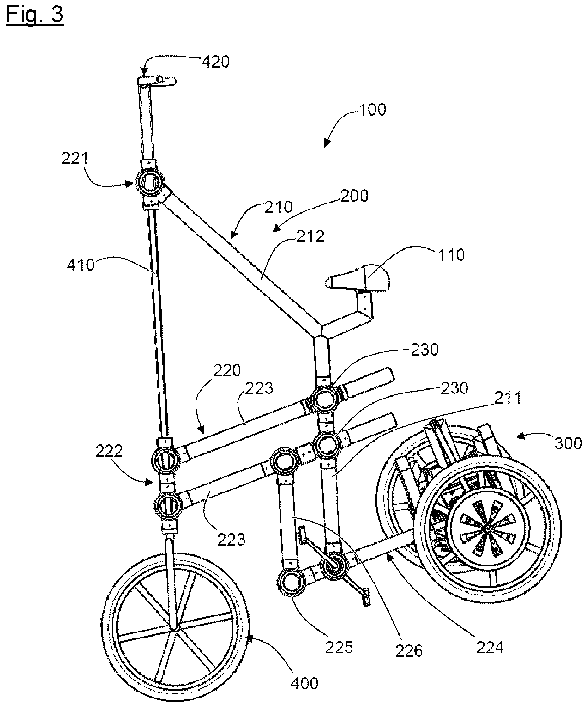

Le châssis 200 est à présent décrit en référence aux figures 1 et 3.

Selon le présent mode de réalisation, le châssis 200 comprend :
- un cadre fixe 210, la selle 110 et le pédalier 510 étant monté sur le cadre fixe ;
- un cadre secondaire 220 qui est déformable.

Le cadre fixe 210 s'étend dans un unique plan, nommé ci-après « plan du cadre ». L'axe de rotation R s'inscrit dans le plan du cadre.

Le cadre secondaire 220, quant à lui, s'étend dans le plan du cadre et est déformable dans le plan du cadre.

Selon un mode de réalisation envisageable, le châssis 200 pourrait ne comprendre qu'un cadre fixe.

Tel qu'illustré sur la figure 3, le cadre fixe 210 comprend un tube verticalisé 211, ou tendant à être verticalisé, et un tube incliné 212, solidaire du tube verticalisé, et s'étendant à partir du tube verticalisé vers le haut.

La selle 110 est portée à l'interface entre le tube verticalisé 211 et le tube inclinée 212.

Le pédalier 510 est quant à lui monté à l'extrémité inférieure du tube verticalisé 211.

Le tube verticalisé 211 présente deux articulations 230 sur lesquelles, tel que cela est détaillé par la suite, le cadre secondaire est monté mobile en rotation, ainsi que mobile en translation.

Le cadre secondaire 220 comprend en effet deux longerons 223 montés glissants sur des points de pivotement portés par le cadre fixe 210. Ces points de pivotement sont formés par les articulations 230.

Les longerons sont montés sur le cadre secondaire 220 de manière à toujours être parallèle l'un à l'autre.

Le cadre secondaire comprend également :
- un tube carter 224 de transmission centré sur l'axe de rotation R, couplé à l'extrémité inférieure du tube verticalisé 211 par une première liaison pivot abritant le pédalier 510 ;
- une second liaison pivot 225 située à une extrémité avant du tube carter 224, opposée à une extrémité arrière du tube carter 221 associée au train roulant 300 ;
- un tube parallèle 226, monté sur la seconde liaison pivot 225 à une extrémité inférieure et s'étendant parallèlement au tube verticalisé 211 jusqu'à un extrémité supérieure couplée à l'un des longerons par l'intermédiaire d'une liaison pivot glissant, le longeron 223 étant monté coulissant et pivotant à l'extrémité supérieure du tube parallèle 226 ;
- un premier palier de direction 221 monté pivotant sur le cadre fixe 210, dans le plan du cadre ;
- un second palier de direction 222 couplé mobile à rotation sur les deux longerons 223.

Dans la conception préférentielle décrite précédemment, la première liaison pivot abritant le pédalier participe à l'équilibre du cycliste dans le plan du cadre fixe et du cadre mobile.

Le premier palier de direction 221 et le second palier de direction 222 reçoivent un axe de direction 410 associé à une roue directrice 400.

Le tricycle 100 présente également un guidon 420 au niveau du premier palier de direction 221. Ce guidon 420 est couplé à l'axe de direction 410 afin d'entraîner ce dernier en rotation, et de faire tourner la roue directrice 400. L'axe de direction 410 est en effet en liaison linéaire rectiligne avec le guidon 420, assurant en liaison pivot, à l'intérieur de la partie supérieure du cadre fixe, la direction du véhicule par le blocage en rotation de l'axe de direction 410 et du guidon 420 l'un par rapport à l'autre, selon l'axe vertical.

Selon les présents modes de réalisation, l'axe de direction 410 est monté coulissant dans le premier palier de direction 221 et dans le second palier de direction 222.

Selon un mode de réalisation envisageable, l'axe de direction 410 peut être avantageusement remplacé par une tige prolongée par un vérin, et au sommet duquel serait positionnée une butée (au milieu du guidon).

Selon d'autres modes de réalisation envisageables, les longerons 223 pourraient également intégrer des tiges prolongées par des vérins contenus par des butées, afin de circonscrire leurs mouvements dans un volume donné, et renforcer la sécurité du tricycle.

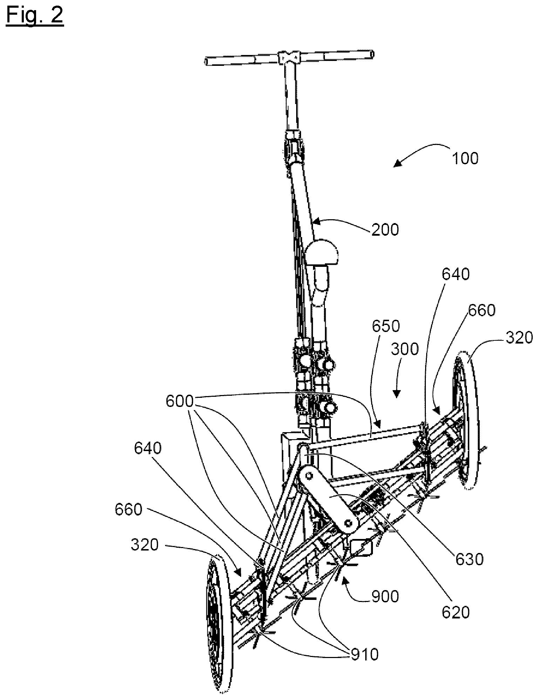

Grâce à la conception précédemment décrit du châssis 200, ce dernier présente une capacité de déformation dans le plan du cadre afin d'adapter la géométrie du châssis 200 à une pente descendante ou ascendante. Sur l'exemple illustré par la figure 3, le tricycle est sur une pente descendante alors que sur la figure 2 le tricycle avance sur une ligne horizontale du terrain qui a un profil incliné.

En référence aux figures 1, 2 et 5, l'intégration du ou des outils de jardinage est à présente décrite.

Les figures 1 et 5 illustrent un mode de réalisation dans lequel l'outil de jardinage 900 comprend des organes de coupe 910 de végétaux aériens et forme un taille haie destiné à s'étendre transversalement à un plan horizontal.

La figure 2 illustre un mode de réalisation dans lequel l'outil de jardinage 900 comprend des organes de coupe 910 d'herbes situés entre les deux roues 320 du train roulant 300.

Il est envisageable que le tricycle comprenne à la fois des organes de coupe 910 pour des végétaux aériens, ainsi que des organes de coupe 910 d'herbes situés entre les deux roues 320 du train coulant 300.

D'autres outils de jardinage peuvent être envisagés.

Tel qu'évoqué précédemment, les organes de coupe 910 sont actionnés par le pédalier 510.

Tel que cela est illustré par les figures 1, 2, et 5, l'outil de jardinage est monté sur le train roulant 300 arrière pendulaire.

De plus, l'outil de jardinage présente, par rapport au châssis 200, une mobilité dépendante d'un degré de rotation du train roulant 300 autour de l'axe de rotation R par rapport au châssis 200.

Tel que cela est visible sur la figure 2 dans laquelle le tricycle évolue sur un terrain en biais avec une pente allant du côté droit de la figure vers le côté gauche de la figure, le train roulant 300, grâce à sa conception, s'incline en fonction de la pente tandis que le châssis reste droit de par la présence et l'action de l'utilisateur du tricycle.

Dans ce mode de réalisation, les organes de coupe 910 sont des organes rotatifs portant des lames ou des fils. Ces organes de coupe 910 sont portés par le train roulant 300, en étant répartis le long de l'axe principal A, entre les deux roues 320, et suivent alors le degré de rotation de l'essieu 310 par rapport au châssis 200.

Le train roulant 300 est bien entendu équipé, entre autres, d'axes de transmission et de sous-ensembles d'engrenages permettant de transmettre le mouvement de rotation de l'essieu autour de l'axe principal A aux organes de coupe 910.

Dans le mode de réalisation des figures 1 et 5, les organes de coupe 910 de végétaux aériens correspondent à des lames conçues pour réaliser une action de cisaillement.

Afin de porter ces lames, l'outil de jardinage 900 comprend un support annexe 920 monté pivotant autour d'un axe parallèle à l'axe de rotation R, sur une extrémité du train roulant 300, à proximité immédiate d'une roue 320.

Ce support annexe 920 est composé d'une pluralité de tube évidé, solidaire les uns des autres, accueillant des moyens de transmission annexes 930.

Le support annexe 920 comprend également une tige support 940 s'étendant parallèlement aux lames en les supportant ces lames.

L'outil de jardinage comprend encore un système de maintien de l'orientation de la tige support 940, et ainsi des organes de coupe 910.

Ce système de maintien prend la forme d'une tige d'espacement 950 couplé à une extrémité d'un fourreau 960 monté mobile en rotation sur un longeron 223 s'étendant vers l'arrière du tricycle 100, au travers de l'articulation 230 sous-jacente à la selle 110.

Le fourreau 960 est plus précisément monté non coulissant par rapport à cette articulation, et mobile à rotation bien entendu.

De cette manière, la distance séparant le point de fixation de la tige d'espacement 950 de l'articulation 230 reste toujours identique.

La tige d'espacement s'étend ainsi du fourreau 960 jusqu'à la tige support 940 où elle est couplée par le biais d'un couplage 970 autorisant un pivotement de la tige support 940 par rapport à la tige d'espacement 950, autour d'un axe parallèle à l'axe de rotation R. Une rotation du train roulant 300 par rapport au châssis 200, amenant au relèvement de la roue 320 arrière gauche, provoque ainsi le relevage par rapport au châssis 200 de l'outil de jardinage 900, dont l'angulation par rapport au châssis 200 est conservée grâce à l'accompagnement du mouvement réalisé par la tige d'espacement 950.

Selon un mode de réalisation préféré, le pédalier assume une position barycentrique, par rapport au triangle formé par les trois points de contact des trois roues avec le sol, selon une projection verticale du pédalier dans le plan défini par ces trois points de contact, que ce plan soit horizontal ou incliné par rapport à un plan horizontal.

Le tricycle précédemment décrit forme une solution de jardinage plus aisée, et plus sécurisante à utiliser que les tricycles de jardinage selon l'art antérieur.

En effet, le tricycle permet de s'adapter aux pentes pratiquées, offrant un confort non négligeable pour l'utilisateur, tout en adaptant l'orientation de l'outil de jardinage porté.

Les outils de jardinage évoqués précédemment peuvent bien entendu être perfectionnés afin, par exemple, que le taille-haie puisse également réaliser une coupe complémentaire en même temps, par exemple pour le haut d'une haie. D'autres outils de jardinage sont envisageables, par exemple pour réaliser un sarclage, un binage, un ramassage, de l'épandage, un démoussage, ou encore un brûlage d'herbes par vaporisation d'eau bouillante...

Pour des outils de jardinage qui présenteraient un axe de fonctionnement devant être perpendiculaires à la pente sur lequel le tricycle évolue, l'orientation perpendiculaire à la pente du support 620 qu'il présente naturellement est utilisée, grâce à des moyens de liaison (par exemple formés par de simples tiges) permettant de paralléliser les axes de fonctionnement des outils de jardinage à l'orientation du support 620.

## Revendications

1. Tricycle (100) de jardinage comprenant :
- des moyens de génération (500) d'un couple moteur comprenant un pédalier (510) ;
- un châssis (200) sur lequel est monté le pédalier (510) et une selle (110) ;
- un train roulant (300) arrière,
le train roulant (300) comprenant :
- un essieu (310) s'étendant selon un axe principal (A) ;
- deux roues (320) montées chacune à une extrémité de l'essieu (310),
dans lequel le tricycle (100) comprend également un outil de jardinage (900) conçu pour découper des végétaux,
**caractérisé en ce que** le train roulant (300) arrière est pendulaire, l'essieu (310) étant monté à rotation sur le châssis (200) selon un axe de rotation (R) s'étendant transversalement à l'axe principal (A) et selon une direction générale d'avancement en marche avant du tricycle (100),
et **en ce que** l'outil de jardinage (900) est monté sur le train roulant (300) et présente, par rapport au châssis (200), une mobilité dépendante d'un degré de rotation du train roulant (300) autour de l'axe de rotation (R) par rapport au châssis (200),
et **en ce que** l'outil de jardinage (900) est actionné par le pédalier (510) et comprend des organes de coupe (910),
et **en ce que** les organes de coupe (910), et les roues (320) du train roulant (300) sont couplés au pédalier (510) par l'intermédiaire de moyens de transmission (700), les moyens de transmission (700) intégrant un ensemble d'engrenages (710) configuré pour augmenter la fréquence d'actionnement des organes de coupe (910) par rapport à une vitesse de rotation du pédalier (510), et diminuer la fréquence de rotation des roues (320) du train roulant (300).

2. Tricycle (100) selon la revendication précédente, **caractérisé en ce que** les ou des organes de coupe (910) sont des organes de coupe (910) d'herbes situés entre les deux roues (320) du train roulant (300).

3. Tricycle (100) selon l'une quelconque des revendications précédentes, **caractérisé en ce que** les ou des organes de coupe (910) sont des organes de coupe (910) de végétaux aériens et forment un taille haie destiné à s'étendre transversalement à un plan horizontal.

4. Tricycle (100) selon l'une quelconque des revendications précédentes, **caractérisé en ce que** le train roulant (300) comprend un mécanisme de verticalisation des roues (320) formé par :
- une couronne principale (610) pour chaque roue (320), la roue (320) étant montée libre à rotation sur sa couronne principale (610) ;
- un support (620) formant bielle monté mobile à rotation à une première extrémité sur le châssis (200), autour de l'axe de rotation (R) ;
- un vilebrequin (630) monté mobile à rotation sur une seconde extrémité du support (620) ;
- un ensemble de barres, pour chaque roue (320), l'ensemble de barres comprenant au moins un groupe d'au moins trois barres parallélisées (600) ne s'inscrivant pas dans un unique plan commun, l'ensemble de barres étant monté pivotant sur la couronne principale (610) de ladite roue (320) autour d'axes parallèles à l'axe de rotation (R), et pivotant sur le vilebrequin (630) autour d'axes parallèles à l'axe de rotation (R).

5. Tricycle (100) selon la revendication précédente, **caractérisé en ce que** le mécanisme de verticalisation des roues (320) comprend une couronne intermédiaire (640) située entre chaque roue (320) et le vilebrequin (630), et centrée sur l'axe principal (A),
et **en ce que** l'ensemble de barre comprend pour chaque roue :
- un groupe proximal (650) du vilebrequin d'au moins trois barres parallélisées (600) s'étendant entre le vilebrequin et la couronne intermédiaire ;
- un groupe distant (660) du vilebrequin (630) d'au moins trois barres parallélisées (600) s'étendant entre la couronne principale (610) et la couronne intermédiaire (640).

6. Tricycle (100) selon l'une quelconque des revendications précédentes, **caractérisé en ce que** le châssis (200) comprend :
- un cadre fixe (210) s'étendant dans un unique plan, dit plan du cadre, dans lequel s'inscrit l'axe de rotation (R), la selle et le pédalier (510) étant monté sur le cadre fixe ;
- un cadre secondaire (220) s'étendant dans le plan du cadre, le cadre secondaire (220) étant déformable dans le plan du cadre,
dans lequel le cadre secondaire (220) comprend :
- un premier palier de direction (221) monté pivotant sur le cadre fixe (210), dans le plan du cadre ;
- deux longerons (223) montés glissants sur des points de pivotement portés par le cadre fixe (210) ;
- un second palier de direction (222) couplé mobile à rotation sur les deux longerons (223) ;
le premier palier de direction (221) et le second palier de direction (223) recevant un axe de direction (410) associé à une roue directrice (400).
